# NEUE EUROPÄISCHE PATENTSCHRIFT

(11) **EP 0 192 184 B2**
(45) Veröffentlichungstag und Bekanntmachung des Hinweises auf die Entscheidung über den Einspruch: **11.08.1993**
(45) Hinweis auf die Patenterteilung: 06.12.1989
(21) Anmeldenummer: 86101798.6
(22) Anmeldetag: 13.02.1986
(51) Int. Cl.: B29C 51/42, B29C 51/10

(54) **Verfahren zur Herstellung geformter Kunststoffelemente sowie Vorrichtung zur Durchführung des Verfahrens**
Method of making moulded plastics elements and apparatus therefor
Procédé et dispositif pour la fabrication d'éléments moulés en matière plastique

(30) Priorität: 20.02.1985 DE 3505828
(43) Veröffentlichungstag der Anmeldung: 27.08.1986
(73) Patentinhaber: J. H. Benecke AG, D-30419 Hannover (DE)
(72) Erfinder: Mente, Kurt, Ing., D-3000 Hannover 21 (DE)
(74) Vertreter: Patentanwälte Thömen & Körner

(56) Entgegenhaltungen:
- EP-A- 0 033 260
- DE-A- 2 138 112
- DE-A- 2 830 740
- DE-A- 3 103 584
- DE-C- 2 919 950
- FR-A- 1 122 016
- FR-A- 2 414 992
- GB-A- 1 164 175
- GB-A- 1 305 950
- US-A- 4 080 416
- US-A- 4 234 536
- Ullmann, Encyklopädie der technischen Chemie, 4. Auflage, 1978, Seite 308, rechte Spalte, letzter Absatz;
- Modern Plastics Encyclopedia, 1969-1970, Seite 534-563

## Beschreibung

Die Erfindung betrifft ein Verfahren zur Herstellung geformter Kunststoffelemente gemäß dem Oberbegriff des Hauptanspruchs. Außerdem befaßt sich die Erfindung mit einer Vorrichtung zur Durchführung des Verfahrens.

Die bekannten Verfahren zur Vakuumverformung von thermoplastischen Folien sind in "Modern Plastics Encyclopedia", 1969 - 1970, Seiten 534 - 563 und in der DE-OS-3 130 584 bereits ausführlich beschrieben. Man unterscheidet demnach Positiv- und Negativ-Verfahren, bei denen die Folie selbst in extremen Fällen nicht über 182°C erwärmt wird, und der Einfluß der Verfahrensbedingungen hinsichtlich einer etwaigen Beeinträchtigung der Dekorseite der Folie findet keine Erwähnung.

Ein derartiges Positiv-Verfahren -jedoch ohne vorherige Aufwölbung - ist auch in der DE-PS-2 508 982 beschrieben, wobei bei diesem Verfahren Wert darauf gelegt wird, daß die Bereitstellungstemperatur möglichst dicht unterhalb der Tiefziehtemperatur liegt, aber noch niedrig genug ist, damit die an den Seitenkanten gehaltene Folie zäh genug ist, um ihr Eigengewicht über längere Zeiträume, ohne zu fließen, halten zu können, wobei die Tiefziehtemperatur je nach Art und Dicke der Folie im Bereich von über 140°C, aber nicht höher als 170°C liegt.

Der Nachteil dieser Positiv-Verfahren besteht darin, daß die Tiefziehfolien im elastisch-plastischen Übergangsbereich bei etwa 140 bis 170°C verformt werden. Kunststoffmoleküle, welche in diesem Bereich verstreckt werden, haben nach Wiedererwärmung das Bestreben, ihre ursprüngliche Wirrlage wieder einzunehmen, wobei sie, wenn sie daran gehindert werden, erhebliche Schrumpfkräfte entwickeln.

Ein beispielsweise nach diesem Verfahren hergestelltes hinterschäumtes Armaturenbrett wird durch Sonneneinwirkung besonders in heißen Klimazonen stark deformiert. Eine fest aufkaschierte Tiefziehfolie reißt sogar auf, da die Schrumpfspannungen die Bruchspannung des Kunststoffes übersteigen.

Neben dem Positiv-Verfahren wird häufig auch das NegativVerfahren angewandt. Bei diesem Verfahren wird die Folie mittels Vakuum in eine konkave Form gesaugt. Da die Verformungstemperaturen ebenfalls im elastisch-plastischen Übergangsbereich liegen, treten hierbei die gleichen Nachteile auf wie beim Positiv-Verfahren.

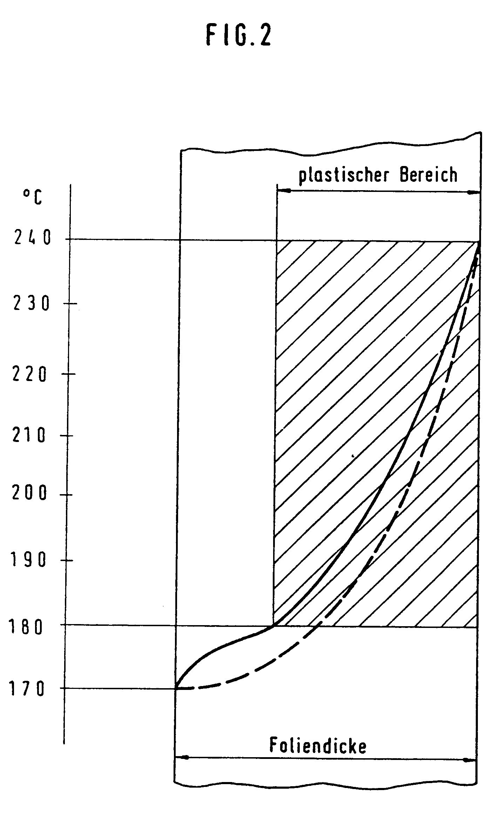

Aus der FR-A-1 122 016 ist auch schon ein Verfahren nach dem Oberbegriff des Patentanspruchs 1 bekannt. Wenn dabei eine Tiefprägung durchgeführt werden soll, wird gemäß Fig. 2 dieser Druckschrifft zunächst in einer oberen Kammer ein Vakuum hergestellt, so daß die Folie herabgezogen wird und die tiefliegenden Teile gleichmäßig gedehnt werden. Anschließend wird ein Modell bzw. eine Preßform eingelegt, und das Verfahren wird mit einem Druck in einer unteren Kammer und einem Unterdruck in der oberen Kammer fortgesetzt.

Danach werden die tiefgezogenen Teile, die an den Rändern eine geringere Wandstärke angenommen haben, erneut komprimiert, so daß die Folie insgesamt eine etwa gleichförmige Wandstärke besitzt, und während dieser Arbeitsvorgänge besteht die Möglichkeit, die Folie beispielsweise durch Infrarotstrahler weiter zu heizen. Mit dieser Heizung soll die Möglichkeit geschaffen werden, ein Tiefziehverfahren auch bei relativ dicken Folien mit großem Querschnitt zu ermöglichen.

Auch bei diesem Verfahren bzw. bei den nach einem solchen Verfahren hergestellten Folien besteht die Gefahr einer späteren Zerstörung, wenn die tiefgezogene Folie durch Sonneneinwirkung starker Hitze ausgesetzt ist, weil die Schrumpfspannungen dann die Bruchspannung des Kunststoffes übersteigen.

Der Erfindung liegt die Aufgabe zugrunde, das Verfahren gemäß dem Oberbegriff des Patentanspruchs 1 dahingehend zu verbessern, daß die Verformung der Tiefziehfolie zu einem entscheidenden Anteil der Dicke im plastischen rückstellfreien Temperaturbereich erfolgt und damit der Gebrauch von z. B. Armaturenbrettern eines Kraftfahrzeuges auch unter extremen klimatischen Bedingungen ermöglicht wird. Außerdem soll durch die Erfindung eine Vorrichtung zur Durchführung des Verfahrens geschaffen werden.

In verfahrensmäßiger Hinsicht erfolgt die Lösung der Aufgabe bei dem Verfahren gemäß dem Oberbegriff des Patentanspruchs 1 durch die Merkmale des kennzeichnenden Teils des Anspruchs 1.

Weitere vorteilhafte Verfahrensmaßnahmen ergeben sich aus den Unteransprüchen.

In Anbetracht dessen, daß die geprägte Dekorseite der Tiefziehfolien wegen der thermischen empfindlichen Narbstruktur nicht über 170°C erhitzt werden darf und der plastische rückstellfreie Temperaturbereich erst bei 180°C beginnt, wird die Folienrückseite so hoch wie möglich erhitzt, um einen möglichst großen Dickenbereich der Folie in den plastischen Zustand zu bringen. Die Grenze der thermischen Belastbarkeit der Folienrückseite liegt bei einer Temperatur von 240°C, sie wird nur für wenige Sekunden ohne Schädigung des Kunststoffes ertragen.

Im plastischen Zustand haben die Folien eine nur geringe Festigkeit. Um einen Durchhang der Folie während des Aufheizprozeßes zu vermeiden, wird die im Rahmen eingespannte Folie von unten mit Stützluft beaufschlagt. Die Stützluft hat außerdem die Funktion, die geprägte Dekorseite der Folie auf weniger als 170°C zu kühlen, wodurch auch an der Dekorseite ein steilerTemperaturverlauferzeugt und damit insgesamt ein noch größerer Anteil des Foliendickenbereiches in dem plastischen Zustand erhitzt wird.

Für das Verfahren ist es des weiteren von ausschlaggebender Bedeutung, daß die Endverformung in möglichst kurzer Zeit von weniger als 5 Sekunden erfolgt. Bei längeren Verformungszeiten ist der Temperaturausgleich zwischen Dekor- und Rückseite der Folie bereits so groß, daß die Narbstruktur der Dekorseite beeinträchtigt wird.

Der Erfindungsgedanke bzw. das erfindungsgemäße Aufheizverfahren ist sinngemäß auch auf das weiter oben genannte Negativ-Verfahren anzuwenden. Zu diesem Zweck wird an Stelle des Form- bzw. Saugkastens ein innengraviertes NegativWerkzeug angeordnet, an das zur Verformung und gleichzeitigen Prägung der Folien Hochvakuum angelegt wird. Die Tiefziehfolien haben hierfür glatte Oberflächen, deren Dekorseite jedoch mit einem Mattlack zur Finishgebung versehen sind.

Hinsichtlich der Vorrichtung zur Durchführung des Verfahrens erfolgt die Lösung der Aufgabe durch die Merkmale des Kennzeichnenden Teils des Patentanspruchs 5.

Als wesentliche Bestandteile der Vorrichtung sind ein nach oben offener Formkasten, eine im offenen Bereich des Formkastens positionierbare Haltevorrichtung, eine darüber positionierbare Heizquelle sowie ein oberes konvexes Formwerkzeug mit Saugöffnungen vorgesehen.

Der Formkasten ist druckfest ausgeführt und besitzt Anschlüsse für die Erzeugung einer Stützluft sowie einen Anschluß zur Erzeugung eines Vakuums innerhalb des Formkastens.

Die Haltevorrichtung besteht aus einem aufklappbaren Spannrahmen, der mitteln eines Kettenantriebes seitlich verfahrbar ist.

Die Heizquelle wird durch einen belüfteten Infrarotstrahler gebildet, der ebenfalls mittels eines Kurbeltriebes in seitlichen Führungen bewegbar ist.

In zweckmäßiger Ausgestaltung ist eine umlaufende Abschirmung des Infrarotstrahlers aus hochpoliertem Aluminiumblech vorgesehen.

Im Ganzen betrachtet umfaßt die neue Vorrichtung ein Untergestell mit zwei seitlichen Führungen, die oben durch eine Traverse gehalten sind. Den Führungen sind Führungskörper zugeordnet, welche senkrecht längs der Führungen bewegbar sind, und welche mit einem Werkzeugträger für das Formwerkzeug und mit einem Pleuel eines Kurbelantriebes verbunden sind.

Der Kurbelantrieb umfaßt eine in ein Zahnrad eingreifende Zahnstange sowie einen mit der Zahnstange verbundenen Hydraulikzylinder.

Der Kurbelantrieb mit den Pleueln ist derart ausgebildet, daß die senkrechte Bewegung des Werkzeugträgers bzw. des damit verbundenen Formwerkzeuges sinusförmig erfolgt. Dadurch wird erreicht, daß das Formwerkzeug langsam verzögert ("weich") in die Verformungsposition gelangt.

Weitere vorteilhafte Ausgestaltungen der Vorrichtung ergeben sich aus den Unteransprüchen und der Zeichnung.

Nachfolgend wird die Erfindung an Hand der in der Zeichnung dargestellten Ausführungsbeispiele näher erläutert. Es zeigen:
Fig. 1 eine schematische Querschnittsansicht einer Vorrichtung zum Herstellen eines geformten Kunststoffelementes,
Fig. 2 einen schematischen Temperaturverlauf über die Foliendicke, aufgetragen nach Beendigung des Aufheizprozeßes unter Einwirkung der kühlenden Stützluft (ausgezogene Linie) und ohne Stützluft (gestrichelte Linie),
Fig. 3 in mehr detaillierter Darstellung eine Vorderansicht eines Prototyps einer Vorrichtung, und
Fig. 4 eine Seitenansicht gemäß Fig. 3, wobei zur besseren Übersicht der Zeichnung nur die eine linke Hälfte dargestellt ist.
Gemäß der Darstellung in Fig. 1 umfaßt die gezeigte Vorrichtung ein Formwerkzeug 10 mit mehreren Saugöffnungen 12 und 14. Das Formwerkzeug 10 ist an einem Werkzeugträger 16 befestigt, der über einen in Fig. 3 und 4 näher gezeigten Kurbelantrieb 52 vertikal bewegbar ist.

Der Werkzeugträger 16 zur Aufnahme des Formwerkzeuges 10 ist als ein mit Rippen versteifter Kastenträger ausgebildet, dessen Hohlraum 18 über ein Anschluß 20 und über eine flexible Leitung an eine hier nicht näher dargestellte Hochvakuumanlage angeschlossen werden kann.

Der Hohlraum 18 mündet ferner in einen weiteren Anschluß 22 mit einem nicht gezeigten Magnetventil, welches nach dem Verformungsvorgang einen Druckausgleich mit dem Luftdruck der Umgebungsluft ermöglicht.

Unterhalb des Formwerkzeuges 10 befindet sich als Heizquelle ein Infrarotstrahler 24 mit einer seitlichen Abschirmung 26. Durch den Doppelpfeil B ist angedeutet, daß der Infrarotstrahler 24 horizontal verfahrbar angeordnet ist.

Weiterhin gehört zu der Vorrichtung ein Spannrahmen 32, in dem die Folie 28 allseitig eingespannt ist. Der Spannrahmen 32 befindet sich oberhalb eines oben offenen Formkastens (Saugkasten) 34, und der Spannrahmen 32 ist ebenfalls seitlich bewegbar.

Der nach oben offene Formkasten 34 besitzt Anschlüsse 36 und 38 für die Stützluft sowie einen weiteren Anschluß 40, über den innerhalb des Formkastens 34 ein Vakuum erzeugt werden kann.

Um die in den Spannrahmen 32 eingespannte Folie 28 zu erhitzen, wird der Infrarotstrahler 24 von der Seite her in die gezeigte Position in die Vorrichtung eingefahren. Gleichzeitig wird durch die Anschlüsse 36 Stützluft in den Formkasten 34 geblasen, wobei die Stützluft über die Öffnung 38 ins Freie strömen kann. Die Geschwindigkeit der abströmenden Luft ist ein Maß für den sich im Formkasten 34 einstellenden Überdruck, der die Folie 28 während des Aufheizprozeßes trägt.

Die Folie 28 ist in der Weise innerhalb des Spannrahmens 32 eingespannt, daß die Dekorseite von dem Infrarotstrahler 24 abgewandt ist. Es wird also die Folienrückseite durch den Infrarotstrahler 24 erhitzt. Nach Erreichen der gewünschten Verformungstemperatur werden die Anschlüsse 36 und 38 über hier nicht näher dargestellte Ventile geschlossen, und gleichzeitig wird an den Anschluß 40 Vakuum angelegt. Hierdurch wird die Folie 28 vorverformt und nimmt etwa die mit der Bezugsziffer 30 durch eine gestrichelte Linie gekennzeichnete Lage ein.

Erst dann fährt der Infrarotstrahler 24 seitlich in eine Warteposition außerhalb der Tiefziehvorrichtung, und der Werkzeugträger 16 fährt mit dem Formwerkzeug 10 schlagartig in den Formkasten 34 ein. In diesem Augenblick wird an das Formwerkzeug 10 über den Anschluß 20 Hochvakuum angelegt, wobei der andere Anschluß 22 geschlossen bleibt.

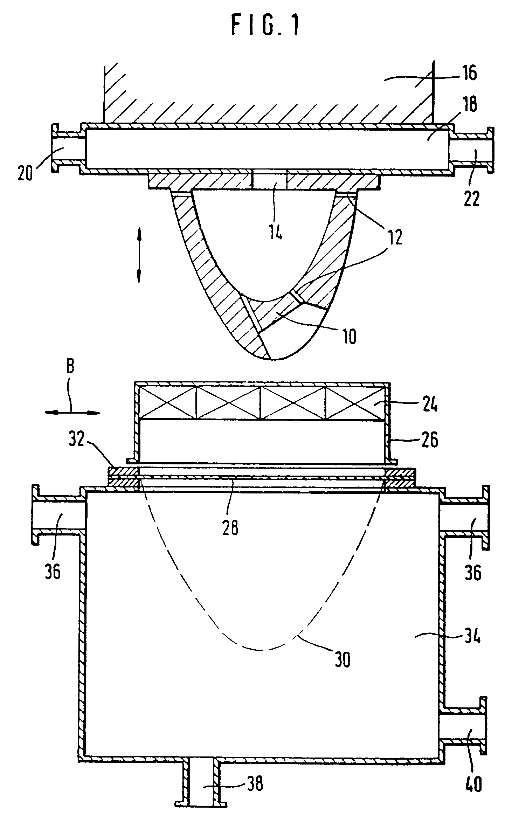

Gleichzeitig wird auch der Anschluß 40 geschlossen und der Anschluß 38 geöffnet, so daß sich im Formkasten 34 der Luftdruck der Umgebungsluft einstellt, der die Folie 28 konturentreu an das Formwerkzeug 10 andrückt. Nach einer Abkühlzeit von etwa 30 Sekunden wird der Anschluß 20 geschlossen und der Anschluß 22 geöffnet, so daß sich im Formwerkzeug 10 wieder der Umgebungsluftdruck einstellt. Jetzt wird das Formwerkzeug 10 wieder nach oben außerhalb des Formkastens 34 in die in Fig. 1 gezeigte Position gefahren, und dem Spannrahmen 32 kann jetzt die fertig geformte Tiefziehfolie entnommen werden.

Zum besseren Verständnis der soweit prinzipiell beschriebenen Verfahrensschritte und des Verformens ist in Fig. 2 der schematische Temperaturverlauf über die Foliendicke nach der Beendigung des Aufheizprozeßes durch den Infrarotstrahler24 dargestellt. Die ausgezogene Linie zeigt den Temperaturverlauf unter der Einwirkung der kühlenden Stützluft, während die gestrichelt gezeichnete Linie den Temperaturverlauf ohne Stützluft wiedergibt.

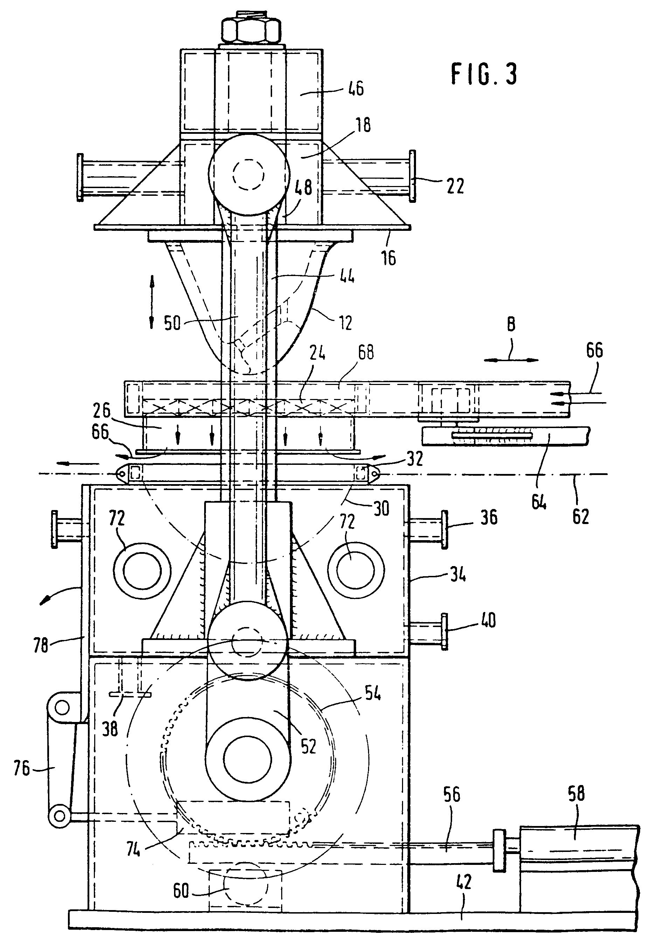

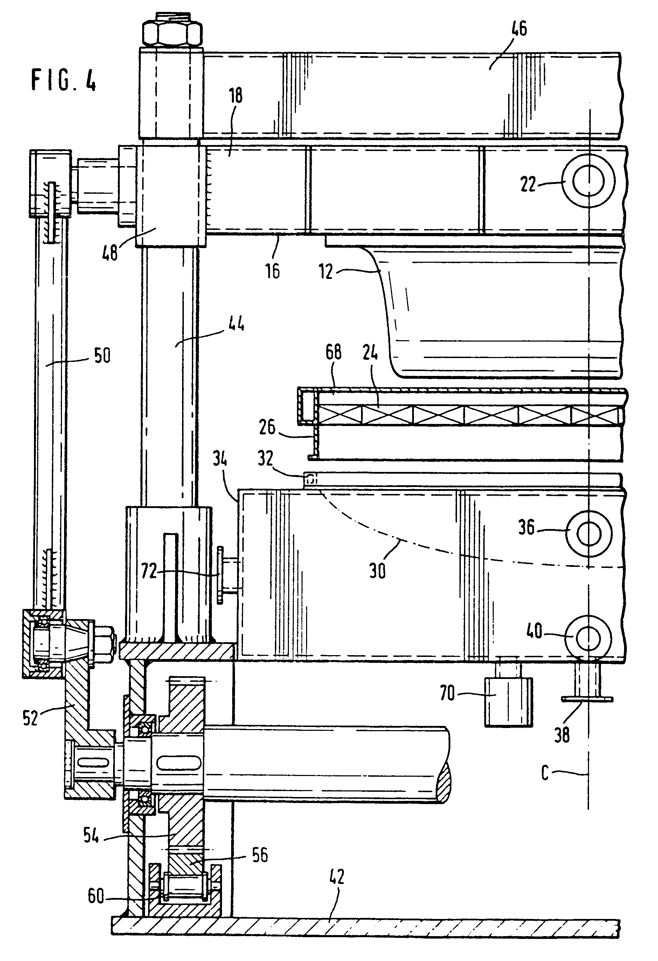

Fig. 3 und 4 zeigen den näheren Aufbau eines Prototyps einer Vorrichtung zur Durchführung des erfindungsgemäßen Verfahrens. Zur Vereinfachung ist dabei in der Seitenansicht gemäß Fig. 4 nur die eine linke Hälfte bis zur Mittellinie C dargestellt.

Die Vorrichtung umfaßt ein Untergestell 42, auf dem seitlich zwei Führungen 44 angeordnet sind, die im oberen Teil durch eine Traverse 46 gehalten werden.

Zu der Führung 44 gehört ein vertikal bewegbarer Führungskörper 48, der einerseits oben mit dem Formwerkzeug 10 und andererseits mit einem Pleuel 50 verbunden ist. Der Führungskörper 48 erfüllt zwei Funktionen, nämlich einerseits eine Vertikalbewegung des Werkzeugträgers 16 und andererseits die Aufnahme des Pleuellagers für die Pleuel 50. Die Pleuel 50 sind Bestandteile des Kurbelantriebes 52, der ein Zahnrad 54, eine durch eine Rolle 60 abgestützte Zahnstange 56 sowie einen Hydraulikzylinder 58 umfaßt.

Über den Hydraulikzylinder 58 wird der Kurbelantrieb 52 vom Zahnrad 54 mittels der Zahnstange 56 bewegt. Dabei wird der Hydraulikzylinder 58 mit einer konstanten einstellbaren Ölmenge beaufschlagt, die den Kolben des Hydraulikzylinders eine konstante Geschwindigkeit verleiht.

Auf diese Weise wird erreicht, daß das Formwerkzeug 10 sinusförmig, d.h., "weich" in die Verformungsposition im unteren toten Punkt des Kurbelantriebes 52 in den Formkasten 34 eintaucht bzw. aufsetzt, und dadurch wird vermieden, daß die Folie 28 durch eine zu hohe Verformungsgeschwindigkeit zerreißen kann.

In einer Einlegestation außerhalb der Vorrichtung wird der Zuschnitt der Tiefziehfolie 28 allseitig in den jetzt außerhalb der Vorrichtung befindlichen Spannrahmen 32 eingespannt und danach mittels eines Kettenantriebes 62 in die Verformungsposition oberhalb des oben offenen Formkastens 34 gefahren.

Gleichzeitig wird der Infrarotstrahler 24 eingeschaltet und ebenfalls über einen Kurbelantrieb 64 mit seitlichen Führungen in die gezeigte Verformungsposition gefahren. Von dem Kurbeltrieb 64 ist in Fig. 3 lediglich der Pleuel dargestellt.

Der Rahmen des Infrarotstrahlers 24 besteht aus einem Rechteckholprofil, in das durch den Pfeil 66 angedeutete Luft mittels eines Ventilators über eine flexible Luftleitung geblasen wird. Die Luft 66 passiert den Druckraum 68 oberhalb der Infrarotstrahlelemente des Infrarotstrahlers 24 und durchströmmt den Druckraumboden durch Löcher von ca. 1,5 mm Durchmesser, die in Reihe zwischen den Infrarotstrahlelementen angeordnet sind. Danach gelangt die Luft 66 durch die Zwischenräume der einzelnen Infrarotstrahlelemente des Infrarotstrahlers 24 zwischen Abschirmung 26 und dem Spannrahmen 32 ins Freie.

Die Luftmenge ist so bemessen, daß die aufsteigenden Weichmacherdämpfe der Folie 28 von den Infrarotstrahlelementen des Infrarotstrahlers 24 ferngehalten und diese in ihren Strahlungsintensitäten nur unwesentlich beeinträchtigt werden.

Die erwähnte Abschirmung 26 besteht aus hochpoliertem Aluminiumblech und hat noch die Aufgabe, die seitliche Abstrahlung des Infrarotstrahlers 24 auf die Folie 28 zu reflektieren, um auch die Randzone der Folie 28 ausreichend zu erwärmen.

Zum Messen der erforderlichen Verformungstemperatur ist ein Infrarotthermometer 70 vorgesehen. Nach dem Erreichen der mit dem Infrarotthermometer 70 gemessenen Verformungstemperatur werden die Anschlüsse 36 und 38 des Formkastens 34 geschlossen, und über den Anschluß 40 ein Vakuum angelegt, und zwar in dem Maße, daß die Folie 28 auf etwa 1/3 bis 1/2 der Werkzeughöhe vorgeformt wird.

Jetzt wird der Infrarotstrahler 24 ausgeschaltet und mittels des Kurbeltriebes 64 in eine Warteposition außerhalb der Vorrichtung gefahren. Praktisch gleichzeitig wird nun der Kurbelantrieb 52 betätigt, um das Formwerkzeug 10 schlagartig in den unteren Totpunkt des Kurbeltriebes bzw. in die Verformungsposition zu fahren.

Nach der Verformung, die - wie bereits weiter oben beschrieben - möglichst schnell erfolgen muß, wird über Anschlüsse 72 über die Stirnseite des Formkastens 34 Kühlluft eingeblasen. Zur schnellen Abkühlung kann der Kühlluft Wasser über Sprühdüsen zugesetzt werden. In Extremfällen ist es auch möglich, das Formwerkzeug 10 durch eingebaute Rohrschlangen direkt mit Wasser zu kühlen.

Nach einer Abkühlzeit von etwa 15 bis 30 Sekunden - je nach Foliendicke -öffnet sich eine mittels eines Pneumatikzylinders 74 und eines Hebels 76 betätigbare Klappe 78 um einen Winkel von 90°. Jetzt wird der Kettenantrieb 62 in Betrieb gesetzt, der das fertig verformte Folienteil im Spannrahmen 32 hängend in Richtung des Pfeiles A zu einer nächsten Arbeitsstation transportiert.

Im Zusammenhang mit Fig. 4 sei nochmals darauf hingewiesen worden, daß hier aus Gründen der Vereinfachung nur die eine Hälfte der Vorrichtung dargestellt ist. Mit Ausnahme der Zahnstange 56 und der damit verbundenen Teile schließt sich die nicht gezeigte rechte Hälfte symmetrisch an, so daß die Mittellinie C insoweit auch als Symmetrielinie aufgefaßt werden kann.

## Patentansprüche

1. Verfahren zum Herstellen eines geformten Kunststoffelements, insbesondere einer auschäumbaren Kraftfahrzeug-Verkleidung aus einer Folie aus tiefziehbarem thermoplastischem Kunststoff, bei dem die von einem Spannrahmen gehaltene Folies bis auf die Warmformtemperatur des Kunststoffes erwärmt und entsprechend der allgemeinen Kontur eines Formwerkzeuges vorformend gewölbt wird, worauf die Folie nach Einfahren des Formwerkzeuges in die Wölbung durch Anlegen der Rückseite der Folie an die Oberfläche des Formwerkzeuges mittels eines Druckunterschiedes endverformt und nach Abkühlung von diesem abgenommen wird, dadurch gekennzeichnet, daß vor dem Endverformen ein Dickenbereich der Folie (28) an deren Rückseite mittels hoher Strahlungsintensität in den plastischen Temperaturbereich des Kunststoffes erhitzt wird, und daß die dekorierte Vorderseite der Folie während des Erhitzens der Rückseite mittels Stützluft auf weniger als 170°C gekühlt wird.

2. Verfahren nach Anspruch 1, dadurch gekennzeichnet, daß die Dicke des plastischen Bereiches mindestens 30 % der Foliendicke beträgt.

3. Verfahren nach Anspruch 1 bei Verwendung von Polyvinylchlorid für die Folie, dadurch gekennzeichnet, daß das Erhitzen der Rückseite auf bis zu 240°C - in Abhängigkeit von der Foliendicke - während 5 bis 45 Sekunden erfolgt.

4. Verfahren nach einem derAnsprüche 1 - 3, dadurch gekennzeichnet, daß das Endverformen zurAufrechterhaltung der Temperaturdifferenz zwischen Vorder- und Rückseite der Folie (28) in weniger als 5 Sekunden erfolgt.

5. Vorrichtung zur Durchführung des Verfahrens gemäß den Ansprüchen 1 - 4, dadurch gekennzeichnet, daß die Vorrichtung einen mit Anschlüssen (36; 38; 40; 72) versehenen, nach oben offenen Formkasten (34) umfaßt, in dessen offenen Bereich eine Haltevorrichtung (32) für die Folie positionierbar ist, daß oberhalb der Haltevorrichtung (32) eine bewegbare Heizquelle (24) angeordnet ist, und daß sich oberhalb der Heizquelle (24) ein in Richtung auf die Folie (28) bewegbares konvexes Formwerkzeug (10) mit Saugöffnungen (12, 14) befindet, und daß der Formkasten (34) über erste Anschlüsse (36) mit Stützluft beaufschlagbar ist, die über einen weiteren Anschluß (38) abströmt.

6. Vorrichtung nach Anspruch 5, dadurch gekennzeichnet, daß der Formkasten (34) derart ausgebildet ist, daß in seinem Innenraum bei geschlossenen ersten Anschlüssen (36) und geschlossenem weiteren Anschluß (38) ein Vakuum über einen Anschluß (40) erzeugt werden kann.

7. Vorrichtung nach einem der vorhergehenden Ansprüche 5 - 6, dadurch gekennzeichnet, daß der Formkasten (34) Anschlüsse (72) für die Zufuhr von Kühlufft besitzt.

8. Vorrichtung nach einem der vorhergehenden Ansprüche 5 - 7, dadurch gekennzeichnet, daß der Formkasten (34) eine seitliche Klappe (78) besitzt, die mittels einer Vorrichtung (74, 76) geöffnet werden kann, so daß das fertig verformte Folienteil den Formkasten (34) seitlich verlassen kann.

9. Vorrichtung nach Anspruch 5, dadurch gekennzeichnet, daß die Haltevorrichtung durch einen seitlich verfahrbaren Spannrahmen (32) zur Aufnahme der Folie (28) gebildet ist.

10. Vorrichtung nach Anspruch 9, dadurch gekennzeichnet, daß ein Kettenantrieb (62) für die Bewegung des Spannrahmens (32) vorgesehen ist.

11. Vorrichtung nach Anspruch 5, dadurch gekennzeichnet, daß der Rahmen der als Infrarotstrahler (24) ausgebildeten Heizquelle aus einem Hohlprofil besteht, wobei oberhalb des Infrarotstrahlers (24) ein Druckraum (68) vorgesehen ist, in dessen Druckraumboden sich Lochreihen befinden.

12. Vorrichtung nach Anspruch 11, dadurch gekennzeichnet, daß seitlich des Infrarotstrahlers (24) eine Abschirmung (26) aus hochpoliertem Aluminiumblech vorgesehen ist.

13. Vorrichtung nach Anspruch 11 - 13, dadurch gekennzeichnet, daß der Infrarotstrahler (24) mittels eines Kurbeltriebes (64) seitlich verfahrbar ist.

14. Vorrichtung nach Anspruch 5, dadurch gekennzeichnet, daß ein Untergestell (42) mit zwei seitlichen Führungen (44) vorgesehen ist, die oben durch eine Traverse (46) gehalten sind.

15. Vorrichtung nach Anspruch 14, dadurch gekennzeichnet, daß ein längs der Führungen (44) senkrecht bewegbarer Führungskörper (48) vorgesehen ist, welcher mit einem Werkzeugträger (16) verbunden ist, der das Formwerkzeug (10) trägt.

16. Vorrichtung nach Anspruch 14 - 15, dadurch gekennzeichnet, daß ein Kurbelantrieb (52) für den Werkzeugträger (16) vorgesehen ist, und daß der Kurbelantrieb Pleuel (50) besitzt, die mit dem Führungskörper (48) verbunden sind.

17. Vorrichtung nach Anspruch 16, dadurch gekennzeichnet, daß der Kurbelantrieb (52) eine Zahnstange (56) mit einer Unterstützungrolle (60) und mit einem Zahnrad (54), sowie einen Hydraulikzylinder (58) umfaßt.

18. Vorrichtung nach einem der vorhergehenden Ansprüche 15 - 17 dadurch gekennzeichnet, daß der Kurbelantrieb (52) eine sinusförmige Bewegung bewirkt, so daß das Formwerkzeug (10) langsam verzögert in die Verformungsposition einfährt.

19. Vorrichtung nach Anspruch 5, dadurch gekennzeichnet, daß das Formwerkzeug (10) über die Saugöffnungen (12, 14) und den Hohlraum (18) an den Hochvakuumanschluß (20) angeschlossen ist.

20. Vorrichtung nach Anspruch 19, dadurch gekennzeichnet, daß der Druckausgleich vom Vakuum auf den Umgebungsluftdruck über einen Anschluß (22) vorgenommen wird.

## Claims

1. A method of making a moulded plastics element, especially a foamable automobile liner, from a sheet of deep-drawable thermoplastics, wherein the sheet, held by a clamping frame, is heated to the hot moulding temperature of the plastics and is bent in predeforming to the general contour of a mould, whereupon the sheet, after the mould has been introduced into the curve, is finally moulded by application of the rear face of the sheet to the surface of the mould by means of a pressure difference and, after cooling, is removed from the mould, characterized in that, before the final moulding, a thickness zone of the sheet (28) at its rear face is heated by radiation of high intensity into the plastic temperature range of the plastics material, and that the decorated front face of the sheet is cooled to less than 170°C by means of supporting air during the heating of the rear face.

2. A method according to claim 1, characterized in that the thickness of the plastic zone is at least 30 % of the sheet thickness.

3. A method according to claim 1, where polyvinyl chloride is used for the sheet, characterized in that the heating of the rear face to up to 240°C is carried out in 5 to 45 seconds, depending upon the sheet thickness.

4. A method according to one of Claims 1 to 3, characterized in that the final moulding is carried out in less than 5 seconds in order to maintain the temperature difference between the front and rear faces of the sheet (28).

5. Apparatus for carrying out the method according to Claims 1 to 4, characterized in that the apparatus comprises an open-top moulding box (34), furnished with connections (36; 38; 40; 72), in the open part of which a holding device (32) for the sheet (28) can be positioned, that above the holding device (32) a movable heat source (24) is disposed, and that above the heat source (24) a convex mould (10), movable towards the sheet (28) and furnished with suction openings (12, 14), is situated, and that the moulding box (34) can be fed through first connections (36) with supporting air, which flows out through a further connection (38).

6. Apparatus according to Claim 5, characterized in that the moulding box (34) is so constructed that, when the first connections (36) are closed and the further connection (38) is closed, a vacuum can be produced in its interior via a connection (40).

7. Apparatus according to one of the preceding Claims 5 to 6, characterized in that the moulding box (34) possesses connections (72) for the supply of cooling air.

8. Apparatus according to one of the preceding Claims 5 to 7, characterized in that the moulding box (34) possesses a lateral flap (78), which can be opened by means of a device (74, 76) so that the finally moulded sheet component can leave the moulding box (34) at the side.

9. Apparatus according to Claim 5, characterized in thatthe holding device is formed of a laterally traversable clamping frame (32) for receiving the sheet (28).

10. Apparatus according to Claim 9, characterized in that a chain drive (62) for the movement of the clamping frame (32) is provided.

11. Apparatus according to Claim 5, characterized in thatthe frame of the heat source, constructed as infrared radiator (24), consists of a hollow profile, a pressure chamber (68) being provided above the infrared radiator (24), this pressure chamber having rows of holes in its base.

12. Apparatus according to Claim 11, characterized in that, laterally of the infrared radiator (24), a shield (26) of highly polished aluminium sheet is provided.

13. Apparatus according to Claims 11 to 12, characterized in that the infrared radiator (24) is laterally traversable by means of a crank drive (64).

14. Apparatus according to Claim 5, characterized in that a bottom frame (42) having two lateral guides (44) is provided, which guides are connected together at the top by a cross-beam (46).

15. Apparatus according to Claim 14, characterized in that a guide block (48), movable vertically along the guides (44), is provided, which guide block is connected with a mould carrier(16), which carries the mould (10).

16. Apparatus according to Claims 14 to 15, characterized in that a crank drive (52) for the mould carrier (16) is provided, and that the crank drive possesses connecting rods (50), which are connected with the guide block (48).

17. Apparatus according to Claim 16, characterized in that the crank drive (52) comprises a toothed rack (56) with a supporting roller (60) and with a pinion (54), and also a hydraulic cylinder (58).

18. Apparatus according to one of the preceding Claims 15 to 17, characterized in that the crank drive (52) produces a sinusoidal movement, so that the mould (10) enters the moulding position with gradual deceleration.

19. Apparatus according to Claim 5, characterized in that the mould (10) is connected to the high-vacuum connection (20) through the suction openings (12, 14) and the internal space (18).

20. Apparatus according to Claim 19, characterized in that the pressure equalization from vacuum to atmospheric pressure is effected through a connection (22).

## Revendications

1. Procédé de fabrication d'un élément moulé en matière plastique, en particulier d'un habillage moulable par expansion pour voitures automobiles, consistant en une feuille de matière plastique thermoplastique emboutissable, suivant lequel la feuille maintenue par un cadre de serrage est portée à la température de thermoformage de la matière plastique et préformée en la bombant suivant le contour général d'un outil de formage, après quoi l'outil de formage étant introduit dans le bombement, la feuille est finalement moulée, en mettant son côté arrière contre la surface de l'outil de formage, au moyen d'une différence de pression et retirée de l'outil de formage après refroidissement, caractérisé en ce qu'avant le moulage final, une zone de l'épaisseur de la feuille (28) du côté arrière est chauffée dans le domaine de température de plasticité de la manière plastique au moyen d'une plus forte intensité de rayonnement, et en ce que le côté avant décoré de la feuille est, pendant le réchauffement du côté arrière, refroidi à moins de 170°C, au moyen d'air d'appoint.

2. Procédé suivant la revendication 1, caractérisé en ce que l'épaisseur de la zone rendue plastique correspond à au moins 30 % de l'épaisseur de la feuille.

3. Procédé suivant la revendication 1, caractérisé en ce que, dans le cas où on utilise pour la feuille du chlorure de polyvinyle le réchauffement du côté arrière jusqu'à une température pouvant atteindre 240°C, dure de 5 à 45 secondes.

4. Procédé suivant l'une des revendications 1 à 3, caractérisé en ce que le moulage final dure moins de 5 secondes afin de maintenir l'écart des températures entre le côté avant et le côté arrière de la feuille (28).

5. Dispositiv servant à la mise en oeuvre du procédé suivant l'une des revendications 1 à 4, caractérisé en ce que le dispositif comprend un châssis de moule (34) ouvert vers le haut et pourvu de raccords (36, 38, 40, 72), dans la zone ouverte duquel peut être positionné un dispositif de maintenue (32) de la feuille en ce qu'au-dessus du dispositif de maintenue (32) est disposée une source de chauffage mobile (24) et en ce qu'au-dessus de la source de chauffage (24) se trouve un outil de formage (10) convexe, déplaçable en direction de la feuille (28) et pourvu d'ouvertures d'aspiration (12,14), et en ce que le châssis de moule (34) peut être alimenté par l'intermédiaire de premiers raccords (36) en air d'appoint qui s'échappe à travers un autre raccord (38).

6. Dispositif suivant le revendication 5, caractérisé en ce que le châssis de moule (34) est réalisé de façon qu'en fermant les premiers raccords (36) et l'autre raccord (38) on peut établir à l'intérieur du châssis un vide par un raccord (40).

7. Dispositif suivant l'une des revendications précédentes 5 à 6, caractérisé en ce que le châssis de moule (34) possède des raccords (72) pour l'amenée d'air de refroidissement.

8. Dispositif suivant l'une des revendications précédentes 5 à 7, caractérisé en ce que le châssis de moule (34) possède une trappe latérale (78) qui peut être ouverte au moyen d'un dispositif (74, 76), pour que la partie de feuille moulée finie puisse sortir latéralement du châssis de moule (34).

9. Dispositif suivant la revendication 5, caractérisé en ce que le dispositif de maintenue est constitué d'un cadre de serrage (32) déplaçable latéralement servant à porter la feuille (28).

10. Dispositif suivant la revendication 9, caractérisé en ce qu'une commande par chaîne (62) est prévue pour déplacer le cadre de serrage (32).

11. Dispositif suivant la revendication 5, caractérisé en ce que le cadre de la source de chauffage, réalisé sous la forme d'un radiateur à infrarouges (24), est constitué d'un profil creux, une chambre sous pression (68) étant prévue au-dessus du radiateur à infrarouges et dans le fond de laquelle il y a des rangées de trous.

12. Dispositif suivant la revendication 11, caractérisé en ce qu'à côté du radiateur à infrarouges (24) est prévu un écran (26) en tôle d'aluminium hyper poli.

13. Dispositif suivant les revendications 11 et 12, caractérisé en ce que le radiateur à infrarouges (24) peut être latéralement déplacé au moyen d'une commande à manivelle (64).

14. Dispositif suivant la revendication 5, caractérisé en ce qu'est prévu un support (42) possédant deux coulisses latérales (44) reliées en haut par une traverse (46).

15. Dispositif suivant la revendication 14, caractérisé en ce qu'est prévu un corps de guidage (48) déplaçable perpendiculairement le long des coulisses (44) et relié à un porte-outil (16) qui porte l'outil de formage (10).

16. Dispositif suivant les revendications 14 et 15, caractérisé en ce qu'une commande à manivelle (52) est prévue pour le porte-outil (16) et en ce que cette commande à manivelle possède des bielles (50) reliées au corps de guidage (48).

17. Dispositif suivant la revendication 16, caractérisé en ce que la commande à manivelle (52) comprend une crémaillère (56) avec un galet de support (60) et une roue dentée (54), ainsi qu'un vérin hydraulique (58).

18. Dispositif suivant l'une des revendications précédentes 15 à 17, caractérisé en ce que la commande à manivelle (52) entraîne un mouvement sinusoïdal, pour que l'outil de formage (10) adopte la position de formage avec retard.

19. Dispositif suivant la revendication 5, caractérisé en ce que l'outil de formage (10) est relié au raccord à vide poussé (20), par l'intermédiaire des ouvertures d'aspiration (12, 14) et l'espace creux (18).

20. Dispositif suivant la revendication 19, caractérisé en ce que la compensation de pression entre le vide et la pression de l'air ambiant a lieu au moyen d'un raccord (22).
